# FASCICULE DE BREVET EUROPEEN

(11) **EP 0 606 440 B1**
(45) Date de publication et mention de la délivrance du brevet: **26.11.1997**
(21) Numéro de dépôt: 93916022.2
(22) Date de dépôt: 20.07.1993
(51) Int. Cl.: A47J 37/08

(54) **PROCEDE DE GRILLAGE ET/OU DE RECHAUFFAGE D'UN PRODUIT AGROALIMENTAIRE, ET DISPOSITIF DE MISE EN OEUVRE DUDIT PROCEDE**
VERFAHREN ZUM RÖSTEN UND/ODER ERWÄRMEN EINES AGRONAHRUNGSMITTELPRODUKTS UND EINRICHTUNG ZUR AUSFÜHRUNG DIESES VERFAHRENS
METHOD OF GRILLING AND/OR HEATING A FOOD PRODUCT, AND DEVICE THEREFOR

(30) Priorité: 30.07.1992 FR 9209677
(43) Date de publication de la demande: 20.07.1994
(73) Titulaire: SEB S.A., 69130 Ecully (FR)
(72) Inventeur: EISENBERG, Roger, F-57157 Marly (FR); KLINGER, Michel, F-68140 Stosswihr (FR)
(86) Numéro de dépôt international: FR9300742
(87) Numéro de publication internationale: WO9403094

(56) Documents cités:
- EP-A- 0 445 060
- GB-A- 1 134 016
- PATENT ABSTRACTS OF JAPAN vol. 16, no. 261 (C-950)12 Juin 1992 & JP,A,04 061 834 (MITSUBISHI ELECTRIC HOME APPLIANCE) 27 Février 1992

## Description

### DOMAINE TECHNIQUE

La présente invention se rapporte au domaine technique général des procédés et dispositifs ayant pour objet le grillage ou réchauffage de produits agro-alimentaires comestibles, par soumission à un rayonnement infra-rouge.

L'invention concerne un procédé de grillage et/ou de réchauffage d'un produit agro-alimentaire, de type carné ou panifié par exemple, dans lequel on soumet le produit agroalimentaire au rayonnement infra-rouge d'un ou plusieurs moyens de grillage électrique pendant une période de temps T représentant le cycle total de grillage du produit.

La présente invention concerne également un dispositif de mise en oeuvre du procédé de grillage et/ou de réchauffage, plus particulièrement adapté au grillage de produits panifiés tels que pains, croque-monsieurs, viennoiserie ou autres. La présente invention n'est pas limitée à ce type particuliers de produits agro-alimentaires, mais peut être étendue au grillage et/ou au réchauffage de produits à base de viande.

### TECHNIQUE ANTERIEURE

Les grille-pain connus de l'art antérieur sont généralement constitués d'une chambre de chauffe à l'intérieur de laquelle s'étendent des moyens de grillage et/ou de réchauffage formant des sources d'émission de rayonnements infra-rouges. De manière classique, les sources d'émission d'infra-rouges peuvent être constituées de barreaux de quartz incluant un fil résistif, soit encore de barreaux de stéatite sur lesquels est enroulé et spiralé un fil résistif. Dans de tels appareils, le procédé de grillage consiste à exposer le pain à un rayonnement infra-rouge sensiblement constant pendant toute la durée de la période de grillage. Ces procédés classiques impliquent d'alimenter électriquement en permanence le fil résistif à partir de la fermeture d'un interrupteur principal actionné par l'utilisateur, et ce, pendant une période totale de grillage au préalablement réglée également par l'utilisateur. Généralement, la charge du fil résistif est de l'ordre de 4 à 9 watts par cm2, la température atteinte par le fil étant comprise entre 800 et 1000 °C. Le temps de montée en température du fil résistif est généralement de l'ordre de 40 secondes. Les grille-pain traditionnels fonctionnant selon ce principe ne permettent pas de faire varier la qualité de grillage. En effet, la constance de l'alimentation électrique induit un rayonnement infra-rouge également constant, seuls les paramètres relatifs au temps de grillage total pouvant varier. Cette limitation dans les possibilités de réglage peut être considérée comme un inconvénient, dans la mesure où la qualité du grillage d'un produit panifié est fonction de deux paramètres, à savoir la couleur plus ou moins foncée du produit grillé, et sa structure croustillante exprimée en quantité d'eau extraite. Dans les appareils classiques de l'art antérieur, tels que ceux décrits précédemment, il est impossible d'agir de manière séparée sur ces deux paramètres puisque la possibilité de réglage de l'appareil est limitée au réglage du temps de grillage total. Dans un tel cas, la réduction du temps de grillage total entraîne également la réduction de la quantité d'eau extraite et corrélativement une couleur de grillage claire. Inversement, toute augmentation du temps de grillage total se traduit par un brunissement du produit et un déssèchement lié à l'augmentation de la quantité d'eau extraite. Les grille-pain connus de l'art antérieur sont également considérés comme présentant un temps de montée en température trop long. Un exemple de procédé et dispositif de grillage et/ou de réchauffage de l'art antérieur est décrit dans le document JP-A-461834

### EXPOSE DE L'INVENTION

La présente invention vise en conséquence à remédier aux problèmes mentionnés précédemment, et à fournir un procédé et un dispositif de grillage et/ou de réchauffage d'un produit agro-alimentaire, permettant d'obtenir une gamme étendue de possibilités de réglage.

Un autre objet de l'invention vise à fournir un procédé et un dispositif de grillage et/ou de réchauffage d'un produit agro-alimentaire dans lequel le temps de grillage et/ou de réchauffage est réduit.

Les objets assignés à l'invention sont atteints à l'aide d'un procédé de grillage et/ou de réchauffage d'un produit agro-alimentaire de type carné ou panifié par exemple selon les caractéristiques de la revendication indépendante 1 et d'un dispositif de mise en ouvre dudit procédé selon les caractéristiques de la revendication indépendante 14.

Des modes particuliers de réalisation de l'invention sont indiqués dans les revendications dépendantes.

### DESCRIPTION SOMMAIRE DES DESSINS

D'autres particularités et avantages de l'invention apparaitront et ressortiront plus en détails, à la lecture de la description faite ci-après, en référence aux dessins annexés, donnés à titre d'exemples illustratifs non limitatifs dans lesquels :
- la figure 1 montre le cycle de variation de l'alimentation électrique selon le procédé de l'invention.
- la figure 2 montre un graphe représentant la variation dans le temps de la température des deux sources émettrices infra-rouges selon le procédé de l'invention.
- la figure 3 montre un graphe représentant le spectre de rayonnement infra-rouge des sources émettrices de rayonnement selon le procédé conforme à l'invention.
- la figure 4 montre un graphe représentant l'évolution dans le temps du rayonnement infra-rouge de chacune des sources émettrices de rayonnement selon le procédé conforme à l'invention.
- la figure 5 montre selon une coupe transversale schématique un exemple de dispositif de mise en oeuvre du procédé selon l'invention.
- la figure 6 montre un schéma électrique de principe du montage d'un moyen de grillage électrique conforme à l'invention et fonctionnant selon le procédé de l'invention.

### MANIERE DE REALISER L'INVENTION

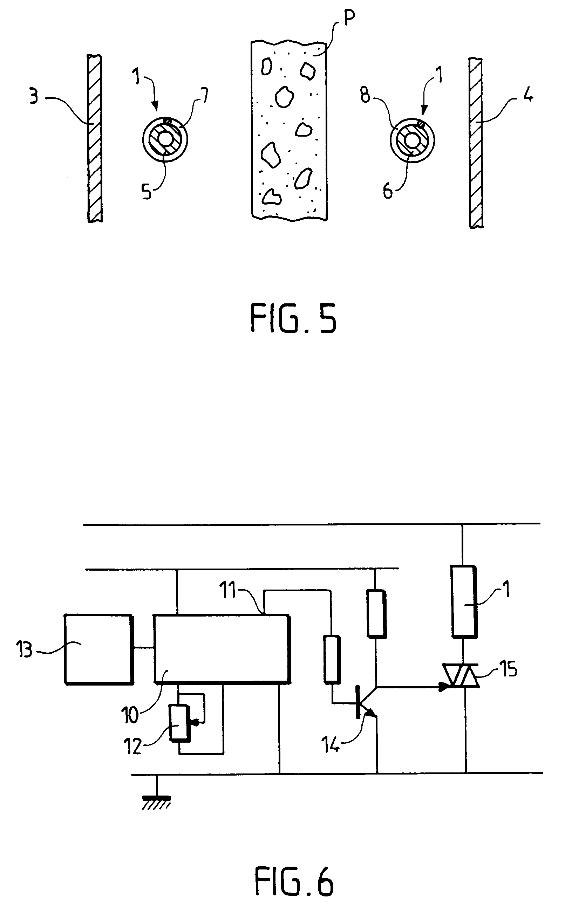

Le procédé de grillage et/ou de réchauffage d'un produit agro-alimentaire, de type carné ou panifié par exemple, consiste à soumettre, tel que cela est montré à la figure 5, le produit P au rayonnement infra-rouge d'au moins un, et de préférence deux moyen(s) de grillage électrique 1. Dans l'exemple de réalisation montré à la figure 5, le produit P est constitué d'une tranche de pain insérée dans une chambre de chauffe délimitée par deux parois extérieures 3, 4. Avantageusement, les moyens de grillage électriques 1 sont formés par deux barreaux, respectivement 5, 6, par exemple de section circulaire et réalisés en stéatite, sur lesquels sont enroulés en spirales deux fils résistifs 7, 8.

Dans toute la description qui suit, il sera fait plus spécifiquement référence à un procédé de grillage de tranches de pain mettant en oeuvre un grille-pain, mais il est bien évident que le procédé conforme à l'invention peut s'appliquer au grillage de tous types d'articles panifiés ou même à des produits à base de viande. Dans ce dernier cas, le dispositif de mise en oeuvre du procédé de grillage conforme à l'invention est un grille-viande. Le procédé conforme à l'invention n'est également pas limité à la fonction de grillage, mais inclut également de manière exclusive ou non, la fonction de réchauffage d'un produit agro-alimentaire, qu'il soit à base de viande ou de pain. Dans ce dernier cas, les principales applications visées sont celles relatives au réchauffage de plats cuisinés ou de produits tels que des croque-monsieurs par exemple.

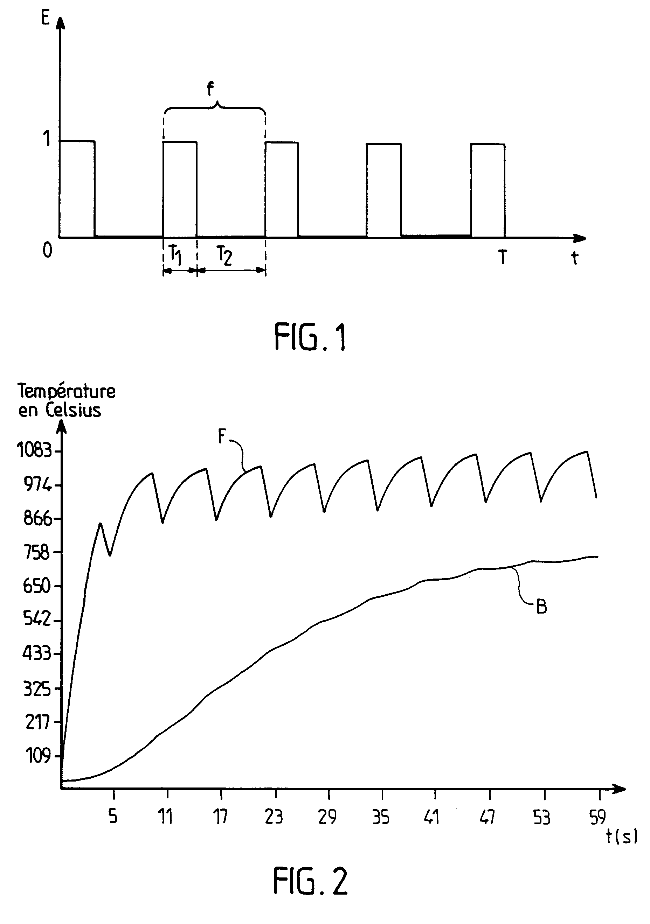

Le procédé de grillage et/ou de réchauffage conforme à l'invention consiste à soumettre le produit P à l'action du ou des moyens de grillage électrique 1 pendant un temps de fonctionnement T représentant le temps total de grillage ou de réchauffage. Le temps T peut être, comme cela est réalisé dans les procédés de grillage classique, déterminée par l'utilisateur lui-même au moyen d'organes de réglage appropriés. Une fois le temps de grillage ou de réchauffage total T est déterminé, on fait varier pendant ce temps T, l'alimentation électrique du moyen de grillage 1 selon un cycle de fréquence f préétabli et définie par une variation discontinue de l'alimentation électrique, tel que cela est montré dans le graphe de la figure 1, entre un état d'alimentation noté 1, et un état de non-alimentation noté 0. On alimente donc, tel que cela est montré à la figure 1, pendant le temps T, de manière séquencée, selon une succession de cycles de fréquence f le ou les moyens de grillage électrique 1. Chaque cycle de fréquence f est décomposé en un temps d'alimentation T1 du ou des moyens de grillage électriques 1 d'une part, et en un temps de non-alimentation en T2 d'autre part. Pendant chaque cycle de fréquence f, le rayonnement infra-rouge généré par le ou les moyens de grillage électrique 1 est donc également caractérisé par une longueur d'onde également variable. Le procédé selon l'invention est caractérisé en ce qu'il consiste à sélectionner un rapport T₁/T₂. Avantageusement, le rapport du temps d'alimentation T1 sur le temps de non-alimentation T2 est constant pendant chaque cycle de fréquence f durant le temps T, mais peut varier d'un temps T à un autre, de préférence dans une plage comprise entre 0,1 et 6. La variation du rapport T1/T2 peut être réalisée directement par l'utilisateur en fonction du degré de grillage ou de réchauffage souhaité. En effet, un rapport T1/T2 sensiblement égal à 0,3, correspondant par exemple à un temps T1 sensiblement égal à 5 secondes et un temps T2 sensiblement égal à 15 secondes, induit un fonctionnement temporel modéré des moyens de grillage 1, reproduisant une fonction dite de décongélation. Un rapport T1/T2 sensiblement équivalent à 0,5 correspondant par exemple à un temps T1 proche de 5 secondes et un temps T2 proche de 10 secondes, peut être assimilé à une fonction de réchauffage. Dans ce cas, les moyens de grillage 1 commencent à rougir. De la même manière, un rapport T1/T2 équivalent à 0,1 correspond à une fonction de maintien au chaud, alors qu'un rapport proche ou égal à 0,95 correspond à une cuisson ou à un grillage dit maximum.

De la même manière, le cycle de fréquence f peut être variable et réglé par l'utilisateur lui-même dans une plage de variation comprise entre 0,033 et 3, (30 et 0,33 secondes) et de préférence entre 0,1 et 2. La plage préférentielle citée, correspond à des valeurs pratiques d'utilisation pour l'utilisateur pendant lesquelles la somme T1 + T2 est donc variable de 0,5 à 10 secondes environ.

Le procédé de grillage et/ou de réchauffage selon l'invention a également pour objectif l'obtention d'un rendement de grillage élevé. A ce titre, la longueur d'onde moyenne sera comprise entre 2,1 et 4,3 micromètres et, de préférence proche de 2,1 microns, le spectre le longueur d'onde de rayonnement total étant compris sensiblement dans une plage variant de 0,9 à 10 microns. Dans ce cas, les températures moyennes qui doivent être atteintes par les moyens de grillage sont proches de 1100 °C. Pour l'obtention de températures de cet ordre, le procédé selon l'invention consiste à soumettre le produit à l'action d'un ou de plusieurs moyens de grillage possédant une puissance surfacique comprise entre 10 et 15 watts par cm2 et de préférence comprise entre 11 et 12 watts par cm2.

Le procédé selon l'invention consiste en conséquence à faire monter, pendant chaque cycle de fréquence f, la température du ou des moyens de grillage 1 jusque dans une plage de température comprise entre 900 et 1100 °C. Avantageusement, la période de temps T correspondant au temps total de grillage sera aussi courte que possible, et à cette fin les températures comprises dans la plage 900-1100 °C seront atteintes en moins de 15 secondes pendant chaque cycle de fréquence f, de préférence en moins de 10 secondes, le cycle de fréquence f standard étant proche de 0,16 (6 secondes). Le cycle de fréquence f standard correspond à un temps T1 d'environ 4,25 secondes et à un temps T2 de 0,75 seconde, et donc à un rapport T1/T2 = 5,66.

Il se révèle particulièrement avantageux d'atteindre aussi vite que possible la température de fonctionnement du fil résistif, à savoir 900 à 1100°C. A cette fin, le premier cycle de fréquence f débutant un temps T sera précédé d'une étape de préchauffe du fil, au cours de laquelle l'alimentation électrique n'est pas cyclée. Avantageusement, cette étape de préchauffe sera de l'ordre de 10 secondes pour un cycle standard.

Il s'avère également, que pour des rapports T1/T2 élevés, de l'ordre de 5 à 6 par exemple, un grillage excessif du produit peut survenir, principalement vers la fin du temps T, et en particulier dans le dernier tiers dudit temps T. Pour éviter le risque de sur grillage pouvant en résulter, il est prévu, de préférence à partir du début du dernier tiers de la période T, de faire décroître automatiquement, avantageusement de manière discontinue, le rapport T1/T2 pour le ramener à une valeur proche de 1,5. Pratiquement, pour un temps de fonctionnement T = 100 secondes et un cycle de fréquence standard dans lequel T1 = 4,25 s et T2 = 0,75 s, cela revient dans le dernier tiers temps de 30 secondes à fonctionner selon le même cycle f mais avec T1 = 3 s et T2 = 2 s. De manière générale, le rapport T1/T2 varie donc selon au moins deux valeurs.

Tel que cela est montré à la figure 5, le procédé selon l'invention consiste à soumettre pendant chaque cycle de fréquence f, le produit à l'action d'au moins un, et préférence deux moyen(s) de grillage 1 formés chacun par au moins deux sources distinctes émettrices de chaleur et de rayonnements infra-rouge. Dans le cas présent, les sources sont constituées respectivement d'un barreau de stéatite 5,6 et d'un fil résistif 7,8, chaque source possédant des caractéristiques d'inertie thermique et de spectre de rayonnement infra-rouge différentes. Une particularité du procédé selon l'invention consiste à fournir suffisamment d'énergie électrique pendant chaque temps T1 pour que les barreaux 5,6 soient portés au moins à leur seuil de rougissement par l'échauffement du fil résistif 7,8 pendant une durée significative au cours du temps T. De cette façon, chaque barreau 5,6 se comporte comme un émetteur infra-rouge secondaire de forte inertie thermique, en plus de la première source infra-rouge constituée par chaque fil résistif 7,8 de faible inertie thermique.

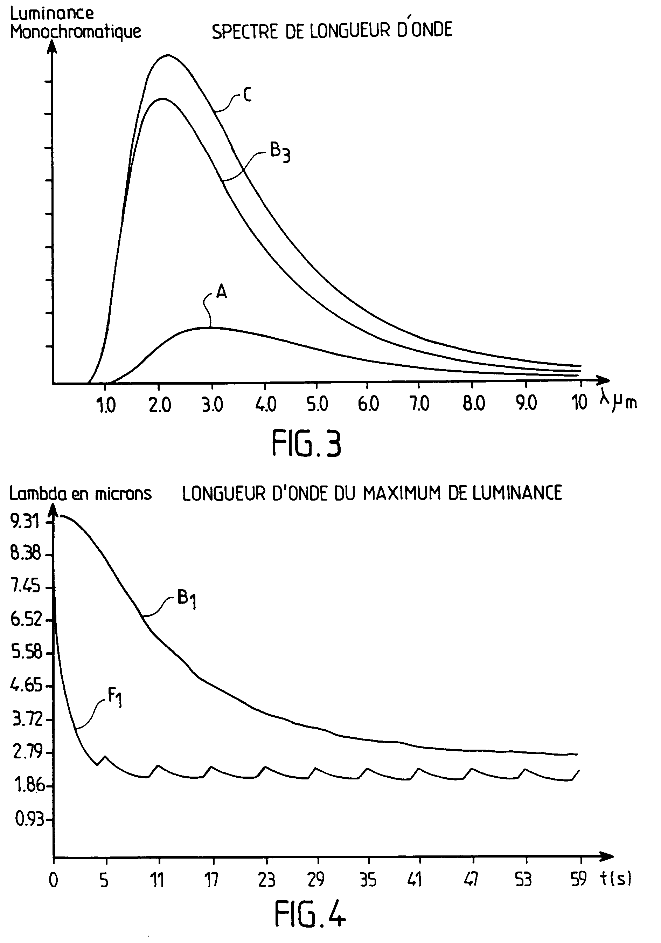

Un tel phénomène est par exemple montré sur le graphe de la figure 2 qui représente pour un temps total de grillage T voisin de 60 secondes les courbes de montée en température respectives du barreau B et du fil résistif F. Le graphe a été établi pour un cycle de fréquence f standard dans lequel T1 est égal à 5 secondes et T2 à 1 seconde. Dans cet exemple de réalisation, le barreau de stéatite atteint en 30 secondes une température proche de 604 °C alors qu'au cours de chaque cycle de fréquence f le fil résistif a une température variant sensiblement entre 850 et 1000 °C. Au cours de chaque cycle de fréquence f, les températures minima et maxima atteintes par le fil résistif peuvent être considérées comme constantes. Pour le même cycle de fréquence f, le graphe de la figure 4 montre la variation dans le temps de la longueur d'onde du maximum de luminance pour chaque source émettrice de rayonnement à savoir la courbe B1 relative au barreau et la courbe F1 relative au fil résistif. Dès la fin du premier cycle de fréquence f, le fil résistif atteint son régime de croisière correspondant à une longueur d'onde moyenne et de grillage proche de 2 microns. En raison de sa forte inertie thermique le barreau n'atteint sa longueur d'onde moyenne de grillage proche de 3 microns, qu'au bout d'une période d'environ 30 secondes. Quel que soit le cycle de fréquence f considéré, la première partie du temps de grillage T représentant par exemple de 20 à 50 % du temps de fonctionnement T, se caractérise par une activité de grillage ou de réchauffage maximale du fil résistif, l'activité du barreau étant quasiment négligeable ou du moins différenciée dans le temps puisque son activité s'accroit régulièrement. La seconde et dernière partie du temps de grillage ou de réchauffage T se caractérise par une action de grillage sensiblement homogène de chacune des deux sources de rayonnement infra-rouge.

Selon une version avantageuse du procédé conforme à l'invention, les moyens de grillage 1 sont soumis durant chaque cycle de fréquence f à une forte charge ne diminuant pas la durée de vie du fil résistif en raison du cyclage de l'alimentation électrique. Le recours à une alimentation séquencée permet en conséquence de choisir des fils résistifs de capacités résistives diminuées, sans pour autant diminuer la durée de vie du dispositif.

Sur la base du cycle de fréquence f standard mentionné précédemment, le graphe de la figure 3 montre la répartition des spectres de longueur d'onde de chaque moyen de grillage 1, le graphe A représentant le spectre de longueur d'onde du barreau de stéatite, le graphe B3 la variation du spectre de longueur d'onde du fil résistif, le graphe C représentant la variation du spectre de longueur d'onde total.

On comprend que pour des caractéristiques intrinsèques données du barreau et du fil résistif, il est possible en faisant varier d'une part le temps de fonctionnement T, et d'autre part le rapport T₁/T₂ d'obtenir par le procédé selon l'invention, une multitude de possibilités de réglage et de mode de fonctionnement. Ceci conduit à la maîtrise de la montée en température de chacune des sources, ainsi qu'à la maîtrise de leurs variations respectives et cumulées de rayonnement infra-rouge. Il est ainsi possible en changeant le rapport T1/T2, de minimiser, voire d'annuler l'apport de rayonnement infra-rouge dû au barreau de stéatite dans les fréquences intéressantes pour des rapports faibles. A l'extrême, avec un rapport T1/T2 voisin de 0,1, il s'avère envisageable de dessécher des tranches de pain tout en les grillant sur leurs faces extérieures pour obtenir l'équivalent de biscottes.

La figure 6 montre un schéma de principe de réalisation d'une unité électrique susceptible d'être montée dans un dispositif de mise en oeuvre du procédé selon l'invention. L'unité électrique comporte un moyen de commande 10 de la variation de l'alimentation électrique du fil résistif 7,8. Le moyen de commande 10 de la variation de l'alimentation électrique peut être avantageusement constitué par un oscillateur réalisé à partir de deux circuits intégrés, tels que par exemple NE 555 ou NE 556 permettant de faire varier selon un cycle de fréquence f le signal transmis à une sortie 11. L'oscillateur est relié à un moyen de réglage du rapport T1/T2 constitué avantageusement par un potentiomètre 12. L'oscillateur peut également être relié à un moyen de temporisation général 13 réglable par l'utilisateur, et destiné à autoriser le fonctionnement de l'oscillateur durant un ou plusieurs temps fixes prédéterminés, correspondant à la période de grillage T.

Le signal électrique transmis par la sortie 11 peut être soumis à l'action d'un amplificateur 14 selon le circuit intégré ou le montage réalisé. L'unité électrique comporte enfin un organe interrupteur 15, sous le contrôle de l'oscillateur, et destiné à assurer suivant la nature du signal basse tension provenant de la sortie 11, l'interruption séquencée de l'alimentation électrique du ou des moyens de grillage 1. l'organe interrupteur 15 peut être constitué d'un triac ou de préférence d'un relais électromagnétique, remplissant une double fonction de coupure bipolaire et d'interruption de l'alimentation électrique.

Bien évidemment, tout autre organe interrupteur susceptible d'assurer une fonction équivalente, peut être utilisé.

Selon une version avantageuse de l'invention, le dispositif pourra comporter une unité électronique programmée, ou un circuit spécifique permettant d'intégrer dans un même boîtier : l'oscillateur, un circuit d'interdépendance entre le moyen de réglage 12 du rapport T1/T2 et le moyen de temporisation général 13, des étages diviseurs et de sorties, des circuits de calcul de compensation tenant compte de l'échauffement de l'appareil et du temps de repos entre deux périodes de grillage.

Dans ce cas, le circuit d'interdépendance permet d'assumer une fonction de couplage et de compensation automatique du réglage des paramètres du grillage à savoir le temps T et le rapport T1/T2. En effet, si schématiquement le réglage du temps T peut être assimilé à un paramètre de contrôle de la couleur du produit grillé, et le réglage du rapport T1/T2 à un contrôle du niveau d'énergie fournie, le réglage de l'un des paramètres doit avantageusement s'accompagner, d'un réglage simultané et compensateur de l'autre paramètre si l'on souhaite obtenir un produit dont le grillage est parfaitement maitrisé.

### POSSIBILITES D'APPLICATION INDUSTRIELLE

Le procédé selon l'invention trouve son application préférentielle dans les appareils de grillage de tous types que ce soient des grille-pain ou des grille-viande, ou même de simples appareils de réchauffage. Après introduction du produit à griller ou à réchauffer dans l'enceinte de chauffe, l'utilisateur, suivant la nature du produit, peut régler luimême à l'aide d'organes de réglage appropriés, d'une part le temps T de grillage et/ou de réchauffage, et d'autre part le rapport T1/T2. Il s'avère ainsi possible d'obtenir par la combinaison de réglage de chacun de ses paramètres une gamme étendue de possibilités de réglage.

## Revendications

1. Procédé de grillage et/ou de réchauffage d'un produit agro-alimentaire, de type carné ou panifié par exemple, dans lequel on soumet ledit produit au rayonnement infrarouge d'au moins un moyen de grillage électrique pendant un temps de fonctionnement T consistant à faire varier pendant le temps T, l'alimentation électrique du moyen de grillage selon au moins un cycle de fréquence (f) pré-établie pour générer un rayonnement infrarouge de longueur d'onde également variable, ledit cycle étant défini par une variation discontinue de l'alimentation électrique entre un état d'alimentation pendant un temps T1 et un état de non-alimentation pendant un temps T2, caractérisé en ce qu'il consiste à sélectionner un rapport de temps d'alimentation T1 sur le temps de non-alimentation T2.

2. Procédé selon la revendication 1 caractérisé en ce qu'il consiste à soumettre pendant chaque cycle de fréquence (f) le produit à l'action d'au moins un moyen de grillage formé par au moins deux sources distinctes émettrices de chaleur, et de rayonnement infrarouge, chaque source possédant des caractéristiques d'inertie thermique et de spectre de rayonnement infrarouge différentes

3. Procédé selon la revendication 1 ou 2 caractérisé en ce que pendant chaque cycle de fréquence (f), le rapport du temps d'alimentation T1 sur le temps de non-alimentation T2 est inclus dans une plage comprise entre 0,1 et 6.

4. Procédé selon l'une des revendications 1 à 3 caractérisé en ce qu'il consiste à faire varier l'alimentation électrique selon un cycle de fréquence (f) compris entre 0,033 et 3, et de préférence entre 0,1 et 2.

5. Procédé selon l'une des revendications 1 à 4 caractérisé en ce qu'il consiste à faire précéder le premier cycle de fréquence (f) par une étape de préchauffe du moyen de grillage, de préférence de l'ordre de 10 secondes, au cours de laquelle l'alimentation électrique n'est pas cyclée.

6. Procédé selon l'une des revendications 1 à 5 précédentes caractérisé en ce qu'il consiste à faire varier le rapport T1/T2 pendant le temps T entre au moins deux valeurs distinctes.

7. Procédé selon la revendication 6 caractérisé en ce qu'il consiste à faire décroître vers la fin du temps T, de préférence dans son dernier tiers, le rapport T1/T2.

8. Procédé selon l'une des revendications 1 à 5 caractérisé en ce qu'il consiste à maintenir constant pendant le temps T le rapport T1/T2.

9. Procédé selon l'une des revendications 1 à 8 caractérisé en ce qu'il consiste à soumettre le produit à l'action d'au moins un moyen de grillage possédant une puissance surfacique comprise entre 10 et 15 W/cm2, et de préférence comprise entre 11 et 12 W/cm2.

10. Procédé selon l'une des revendications 1 à 9 caractérisé en ce qu'il consiste à faire monter, pendant chaque cycle de fréquence (f), la température du ou des moyen(s) de grillage jusque dans une plage comprise entre 900 et 1100 °C, en moins de 15 secondes, et de préférence en moins de 10 secondes.

11. Procédé selon l'une des revendications 1 à 10 caractérisé en ce qu'il consiste à soumettre le produit à une longueur d'onde moyenne comprise entre 2,1 et 4,3 µ, et de préférence sensiblement égale à 2,1 µ.

12. Procédé selon la revendication 2 caractérisé en ce que le moyen de grillage comporte, en tant que première source un fil résistif de faible inertie thermique et, en tant que deuxième source, un barreau support de forte inerte thermique de préférence en stéatite, sur lequel est enroulé ledit fil, ledit barreau étant porté au moins à son seuil de rougissement par l'échauffement dudit fil.

13. Procédé selon l'une des revendications 1 à 12 caractérisé en ce qu'il consiste à assurer un réglage compensateur et couplé de la durée du temps T et du rapport T1/T2.

14. Dispositif de mise en oeuvre de procédé de grillage et/ou de réchauffage selon l'une des revendications 1 à 13 équipé d'une chambre de chauffe pourvue de moyens de grillage (1), d'un moyen de commande (10) de la variation de l'alimentation électrique des moyens de grillage (1), selon un cycle de fréquence (f) au cours duquel l'alimentation électrique est maintenue pendant une durée T1 et interrompue pendant une durée T2, d'un organe interrupteur (15) sous le contrôle du moyen de commande (10) pour assurer l'interruption séquencée selon le cycle de fréquence (f) du moyen de grillage (1), et d'un moyen de temporisation général (13) réglable pour déterminer le temps T du grillage caractérisé en ce qu'il comporte un moyen de réglage (12) du rapport T1/T2 ;

15. Dispositif selon la revendication 14 caractérisé en ce que les moyens de grillage (1) comprennent au moins un barreau (5,6) sur lequel est enroulé un fil résistif (7,8).

16. Dispositif selon la revendication 14 ou 15 caractérisé en ce que :
- le moyen de commande (10) est constitué d'un oscillateur ;
- le moyen de réglage du rapport T1/T2 est constitué d'un potentiomètre (12) ;
- l'organe interrupteur (15) est un triac ou un relais électromagnétique.

17. Dispositif selon l'une des revendications 14 à 16 caractérisé en ce qu'il comporte en outre un circuit d'interdépendance entre le moyen de réglage (12) du rapport T1/T2 et le moyen de temporisation général (13) réglable en vue de permettre un réglage compensateur automatique du moyen de réglage (12) vis à vis du moyen de temporisation général (13) et vice-verça.

18. Dispositif selon l'une des revendications 14 à 17 caractérisé en ce qu'il est constitué d'un grille-pain.

## Claims

1. A method of toasting and/or heating a food product, of the bread-containing or meat-containing type, for example, in which said product is subjected to infrared radiation from at least one electric toasting means during an operating time T, the method consisting in varying during the time T the electrical power supplied to the toasting means in at least one cycle of preestablished frequency (f) for generating infrared radiation of wavelength that is likewise variable, said cycle being defined by discontinuous variation of the electrical power supply between an ON state during a time T1 and an OFF state during a time T2, the method being characterized in that it consists in selecting the ratio of ON time T1 over OFF time T2.

2. A method according to claim 1, characterized in that during each cycle of frequency (f) it consists in subjecting the product to the action of at least one toasting means formed by at least two distinct sources for emitting heat and infrared radiation, each source having different characteristics of thermal inertia and of infrared radiation spectrum.

3. A method according to claim 1 or 2, characterized in that during each cycle of frequency (f), the ratio of ON time T1 over OFF time T2 lies in the range 0.1 to 6.

4. A method according to any one of claims 1 to 3, characterized in that it consists in varying the electrical power supply in a cycle of frequency (f) lying in the range 0.033 to 3, and preferably in the range 0.1 to 2.

5. A method according to any one of claims 1 to 4, characterized in that it consists in preceding the first cycle of frequency (f) with a step of preheating the toasting means, preferably for about 10 seconds, during which the electrical power supply is not cycled.

6. A method according to any one of preceding claims 1 to 5, characterized in that it consists in varying the ratio T1/T2 during the time T over at least two distinct values.

7. A method according to claim 6, characterized in that it consists in decreasing the ratio T1/T2 towards the end of the time T, and preferably during the last third thereof.

8. A method according to one of claims 1 to 5, characterized in that it consists in keeping the ratio T1/T2 constant during the time T.

9. A method according to any one of claims 1 to 8, characterized in that it consists in subjecting the product to the action of at least one toasting means possessing power density per unit area lying in the range 10 W/cm² to 15 W/cm², and preferably lying in the range 11 W/cm² to 12 W/cm².

10. A method according to any one of claims 1 to 9, characterized in that during each cycle of frequency (f) it consists in causing the temperature of the toasting means to rise into the range 900°C to 1100°C in less than 15 seconds, and preferably in less than 10 seconds.

11. A method according to any one of claims 1 to 10, characterized in that it consists in subjecting the product to a mean wavelength lying in the range 2.1 µm to 4.3 µm, and preferably substantially equal to 2.1 µm.

12. A method according to claim 2, characterized in that the toasting means comprises, as first source, a resistance wire having low thermal inertia, and as second source, a supporting bar having high thermal inertia and preferably made of steatite, said wire being wound on said bar, said bar being raised at least to its reddening threshold by heating from said wire.

13. A method according to any one of claims 1 to 12, characterized in that it consists in compensatory and coupled adjustment of the time duration T and of the ratio T1/T2.

14. Apparatus for implementing the toasting and/or heating method according to any one of claims 1 to 13, the apparatus being fitted with a heating chamber provided with toasting means (1), control means (10) for varying the electrical power supply to the toasting means (1) in a cycle of frequency (f) during which said electrical power supply is ON during a time T1 and OFF during a time T2, a switch member (15) under the control of the control means (10) to perform sequenced interruption in the cycle of frequency (f) of the toasting means (1), and an adjustable general timer means (13) for determining the toasting time T, the apparatus being characterized in that it includes means (12) for adjusting the ratio T1/T2.

15. Apparatus according to claim 14, characterized in that the toasting means (1) comprises at least one bar (5, 6) on which a resistance wire (7, 8) is wound.

16. Apparatus according to claim 14 or 15, characterized in that:
• the control means (10) is constituted by an oscillator;
• the means for adjusting the ratio T1/T2 is constituted by a potentiometer (12); and
• the switch member (15) is a triac or an electromagnetic relay.

17. Apparatus according to any one of claims 14 to 16, characterized in that it further includes an interdependence circuit between the means (12) for adjusting the ratio T1/T2 and the adjustable general timer means (13) in order to enable automatic compensating adjustment of the adjustment means (12) relative to the general timer means (13) and vice versa.

18. Apparatus according to any one of claims 14 to 17, characterized in that it is constituted by a toaster.

## Patentansprüche

1. Verfahren zum Rösten und/oder Erwärmen eines landwirtschaftlichen Nahrungsmittels, beispielsweise Fleischwaren oder Backwaren, bei dem das Nahrungsmittel der Infrarotstrahlung wenigstens eines elektrischen Röstmittels während einer Betriebsdauer T ausgesetzt wird, darin bestehend, daß während der Dauer T die elektrische Versorgung des Röstmittels gemäß wenigstens einem vorgegebenen Frequenzzyklus (f) geändert wird, um eine Infrarotstrahlung mit ebenfalls sich ändernder Wellenlänge zu erzeugen, wobei der Zyklus bestimmt ist durch eine diskontinuierliche Änderung der elektrischen Versorgung zwischen einem Versorgungszustand während einer Dauer T1 und einem versorgungsfreien Zustand während einer Dauer T2, dadurch gekennzeichnet, daß es darin besteht, ein Verhältnis von Versorgungsdauer T1 gegenüber der versorgungsfreien Dauer T2 auszuwählen.

2. Verfahren nach Anspruch 1, dadurch gekennzeichnet, daß es darin besteht, das Nahrungsmittel während jedes Frequenzzyklus (f) der Wirkung von wenigstens einem Röstmittel auszusetzen, das durch wenigstens zwei getrennte Quellen gebildet ist, die Wärme sowie Infrarotstrahlung abgeben, wobei jede Quelle unterschiedliche Eigenschaften der Wärmeträgheit und des Spektrums der Infrarotstrahlung aufweist.

3. Verfahren nach Anspruch 1 oder Anspruch 2, dadurch gekennzeichnet, daß das Verhältnis von Versorgungsdauer T1 zur versorgungsfreien Dauer T2 während jedes Frequenzzyklus (f) in einem Bereich zwischen 0,1 und 6 enthalten ist.

4. Verfahren nach einem der Ansprüche 1 bis 3, dadurch gekennzeichnet, daß es darin besteht, die elektrische Versorgung gemäß einem Frequenzzyklus (f) zu ändern, der zwischen 0,033 und 3 und vorzugsweise zwischen 0,1 und 2 enthalten ist.

5. Verfahren nach einem der Ansprüche 1 bis 4, dadurch gekennzeichnet, daß es darin besteht, vor dem ersten Frequenzzyklus (f) einen Schritt des Vorheizens der Röstmittel, vorzugsweise in der Größenordnung von 10 Sekunden, durchzuführen, in dessen Verlauf die elektrische Versorgung sich nicht zyklisch ändert.

6. Verfahren nach einem der vorhergehenden Ansprüche 1 bis 5, dadurch gekennzeichnet, daß es darin besteht, das Verhältnis T1/T2 während der Dauer T zwischen wenigstens zwei verschiedenen Werten zu ändern.

7. Verfahren nach Anspruch 6, dadurch gekennzeichnet, daß es darin besteht, das Verhältnis T1/T2 zum Ende der Dauer T, vorzugsweise in deren letztem Drittel, zu vermindern.

8. Verfahren nach einem der Ansprüche 1 bis 5, dadurch gekennzeichnet, daß es darin besteht, das Verhältnis T1/T2 während der Dauer T konstant zu halten.

9. Verfahren nach einem der Ansprüche 1 bis 8, dadurch gekennzeichnet, daß es darin besteht, das Nahrungsmittel der Wirkung wenigstens eines Röstmittels auszusetzen, das eine Flächenleistung aufweist, die zwischen 10 und 15 W/cm² und vorzugsweise zwischen 11 und 12 W/cm² beträgt.

10. Verfahren nach einem der Ansprüche 1 bis 9, dadurch gekennzeichnet, daß es darin besteht, die Temperatur des Röstmittels oder der Röstmittel während jedes Frequenzzyklus (f) in weniger als 15 Sekunden und vorzugsweise weniger als 10 Sekunden bis in einen Bereich ansteigen zu lassen, der zwischen 900 und 1100°C beträgt.

11. Verfahren nach einem der Ansprüche 1 bis 10, dadurch gekennzeichnet, daß es darin besteht, das Produkt einer mittleren Wellenlänge auszusetzen, die zwischen 2,1 und 4,3 µm beträgt und vorzugsweise im wesentlichen gleich 2,1 µm ist.

12. Verfahren nach Anspruch 2, dadurch gekennzeichnet, daß das Röstmittel als erste Quelle einen Widerstandsdraht mit geringer Wärmeträgheit und als zweite Wärmequelle einen Trägerstab mit großer Wärmeträgheit, vorzugsweise aus Steatit, enthält, auf welchen der Draht aufgewickelt ist, wobei der Stab durch Aufheizen des Drahtes wenigstens bis zur Rotglut gebracht wird.

13. Verfahren nach einem der Ansprüche 1 bis 12, dadurch gekennzeichnet, daß es darin besteht, eine Kompensationseinstellung vorzunehmen, die an die Länge der Dauer T und das Verhältnis T1/T2 gekoppelt ist.

14. Vorrichtung zur Ausführung des Verfahrens zum Rösten und/oder Erwärmen gemäß einem der Ansprüche 1 bis 13, mit einer Heizkammer, die mit Röstmitteln (1) und einem Mittel (10) zur Steuerung der Änderung der elektrischen Versorgung der Röstmittel (1) gemäß einem Frequenzzyklus (f) versehen ist, in dessen Verlauf die elektrische Versorgung während einer Dauer T1 aufrechterhalten wird und während einer Dauer T2 unterbrochen ist, sowie einem von dem Steuermittel (10) kontrollierten Schalter (15), um das sequenzgesteuerte Unterbrechen des Röstmittels (1) gemäß dem Frequenzzyklus (f) zu gewährleisten, und mit einem allgemeinen Zeitgeber (13), der einstellbar ist, um die Dauer T des Röstens zu bestimmen, dadurch gekennzeichnet, daß sie ein Mittel (12) zum Einstellen des Verhältnisses T1/T2 enthält.

15. Vorrichtung nach Anspruch 14, dadurch gekennzeichnet, daß die Röstmittel (1) wenigstens einen Stab (5, 6) enthalten, auf welchen ein Widerstandsdraht (7, 8) aufgewickelt ist.

16. Vorrichtung nach Anspruch 14 oder Anspruch 15, dadurch gekennzeichnet, daß:
- das Steuermittel (10) durch einen Oszillator gebildet ist,
- das Mittel zum Einstellen des Verhältnisses T1/T2 durch ein Potentiometer (12) gebildet ist,
- der Schalter (15) ein Triac oder ein elektromagnetisches Relais ist.

17. Vorrichtung nach einem der Ansprüche 14 bis 16, dadurch gekennzeichnet, daß sie außerdem eine Schaltung zur Erzielung einer gegenseitigen Abhängigkeit zwischen dem Mittel (12) zum Einstellen des Verhältnisses T1/T2 und dem allgemeinen Zeitgeber (13) aufweist, die einstellbar ist, um eine automatische Kompensierungseinstellung des Einstellmittels (12) gegenüber dem allgemeinen Zeitgeber (13) zu ermöglichen, und umgekehrt.

18. Vorrichtung nach einem der Ansprüche 14 bis 17, dadurch gekennzeichnet, daß sie ein Brotröster ist.
